# FASCICULE DE BREVET EUROPEEN

(11) **EP 2 604 019 B1**
(45) Date de publication et mention de la délivrance du brevet: **19.06.2019**
(21) Numéro de dépôt: 11749544.0
(22) Date de dépôt: 28.07.2011
(51) Int. Cl.: H04L 29/06, H04L 29/08

(54) **PROCÉDÉ POUR RALENTIR, VOIRE ÉLIMINER, LA PROPAGATION ILLÉGALE D'UN CONTENU VIDÉO PROTÉGÉ ET DIFFUSÉ EN STREAMING DANS UN RÉSEAU PAIR À PAIR**
VERFAHREN ZUR VERLANGSAMUNG ODER AUCH ELIMINIERUNG DER ILLEGALEN VERBREITUNG VON GESCHÜTZTEN VIDEOINHALTEN MITTELS STREAMING IN EINEM PEER-TO-PEER-NETZWERK
METHOD FOR SLOWING DOWN, OR EVEN ELIMINATING, THE ILLEGAL PROPAGATION OF A PROTECTED VIDEO CONTENT BROADCAST BY STREAMING IN A PEER-TO-PEER NETWORK

(30) Priorité: 11.08.2010 FR 1056561
(43) Date de publication de la demande: 19.06.2013
(73) Titulaire: Trident Media Guard TMG, 44230 St Sebastien Sur Loire (FR)
(72) Inventeur: ROUIBIA, Soufiane, F-44230 Saint Sébastien sur Loire (FR); CASALTA, Bastien, F-44230 Saint Sébastien sur Loire (FR)
(74) Mandataire: Nony
(86) Numéro de dépôt international: PCT/IB2011/053367
(87) Numéro de publication internationale: WO 2012/020347

(56) Documents cités:
- DHUNGEL P ET AL: "Pollution in P2P Live Video Streaming", INTERNATIONAL JOURNAL OF COMPUTER NETWORKS & COMMUNICATIONS (IJCNC), vol. 1, no. 2, juillet 2009 (2009-07), pages 99-110, XP002623266,
- JIE KONG ET AL: "A study of pollution on BitTorrent", COMPUTER AND AUTOMATION ENGINEERING (ICCAE), 2010 THE 2ND INTERNATIONAL CONFERENCE ON, IEEE, PISCATAWAY, NJ, USA, 26 février 2010 (2010-02-26), pages 118-122, XP031661160, ISBN: 978-1-4244-5585-0
- DHUNGEL P ET AL: "Measurement and mitigation of BitTorrent leecher attacks", COMPUTER COMMUNICATIONS, ELSEVIER SCIENCE PUBLISHERS BV, AMSTERDAM, NL, vol. 32, no. 17, 15 novembre 2009 (2009-11-15), pages 1852-1861, XP026558205, ISSN: 0140-3664, DOI: DOI:10.1016/J.COMCOM.2009.07.006 [extrait le 2009-07-14]

## Description

La présente invention concerne un procédé pour ralentir, voire éliminer, la propagation illégale d'un contenu vidéo protégé et diffusé en streaming dans un réseau pair à pair.

Par « diffusion en streaming », il faut comprendre une lecture en flux ou une lecture en continu d'un contenu présent dans le réseau.

Plusieurs réseaux pair à pair proposant des contenus vidéo, encore appelés « réseaux IPTV », sont présents sur Internet et chaque réseau propose par exemple la diffusion d'une centaine de chaînes de télévision. Ces réseaux IPTV mettent en oeuvre leur propre logiciel, par exemple PPLive®, SopCast®, TVAnts®, PPStream® ou encore Stream Torrent®. Ces réseaux utilisent par exemple la technologie BitTorrent® selon laquelle un contenu vidéo est divisé en blocs. Chaque pair du réseau télécharge des blocs chez plusieurs pairs simultanément et visualise le contenu vidéo à partir de ces blocs tout en les partageant avec d'autres pairs.

Ces réseaux IPTV trouvent- par exemple un intérêt pour des événements sportifs non diffusés sur des chaînes télévisées publiques ou diffusés seulement sur des chaînes payantes puisqu'ils peuvent permettre à des utilisateurs de visualiser ces événements gratuitement.

Dans de tels réseaux, un pair lit le contenu vidéo avec un certain décalage temporel comparé à la diffusion de ce contenu par une source dans le réseau. Ce décalage peut par exemple être de l'ordre de 30 secondes à plusieurs minutes. Les blocs du contenu vidéo reçus par le pair sont reconstruits dans une fenêtre de lecture glissante reflétant une mémoire tampon d'affichage. Le pair peut notifier à ses voisins chaque bloc déjà reçu et indiquer les blocs qui lui manquent La fenêtre de lecture peut défiler avec la vitesse de lecture de la vidéo, encore appelée BitRate, le début de la mémoire tampon pointant sur le bloc qui est lu. Les blocs du contenu vidéo manquants à leur date d'affichage sont ignorés, ce qui peut entraîner une dégradation dans la qualité perçue de la vidéo.

La diffusion de contenus vidéos *via* ces réseaux pair à pair IPTV est en plein essor et il n'existe à la connaissance de la Déposante aucune façon efficace de lutter contre la diffusion illégale de contenus vidéos protégés, par exemple parce que diffusés sur des chaînes télévisées protégées par des droits d'accès payants.

L'article de Dhungel P. et al, « Pollution in P2P live video streaming », International journal of computer networks & communications, vol. 1, no. 2, juillet 2009, pages 99-110, décrit et compare des méthodes pour empêcher la corruption de contenus vidéos diffusés en streaming sur des réseaux pair à pair.

Les articles de Dhungel P. et al, « Measurement and mitigation of BitTorrent leecher attacks », Computer communications, vol. 32, no. 17, novembre 2009, pages 1852-1861, et de Jie Kong et al, « A study of pollution on BitTorrent », International conférence on computer and automation engineering, février 2010, pages 118-122, décrivent les effets d'attaques, visant à empêcher la diffusion illégale de contenu, sur un réseau pair à pair de partage de données connu, BitTorrent®.

Il existe un besoin pour ralentir, voire éliminer, la propagation illégale d'un contenu vidéo protégé dans un réseau pair à pair d'une façon simple à mettre en oeuvre, peu coûteuse et relativement efficace.

L'invention a pour but de répondre à ce besoin et elle y parvient, selon l'un de ses aspects, grâce à un procédé selon la revendication 1.

De par l'envoi d'au moins un faux bloc au pair cherchant à récupérer le contenu vidéo pour remplir une fenêtre de lecture, on cause une dégradation de la qualité de ce contenu vidéo. L'invention tire parti du fait que dans les réseaux pair à pair diffusant du contenu vidéo en streaming, la fenêtre de lecture que chaque pair cherche à remplir doit être remplie dans une durée donnée qui est généralement très courte, étant par exemple de l'ordre de 2 à 3 minutes. Cette contrainte temporelle a pour conséquence la faiblesse, voire la non-existence des mécanismes de vérification de l'origine des blocs reçus et de leur validité dans de tels réseaux pair à pair, du fait de leur coût en temps et en occupation du processeur du terminal associé à chaque pair du réseau.

L'envoi au pair de faux blocs est conditionné à la localisation géographique de ce dernier, ce qui permet de n'empêcher la diffusion du contenu vidéo que vis-à-vis de pairs situés dans des pays ou des régions dans lesquels la diffusion est protégée. On peut ainsi perturber la récupération de ce contenu de façon ciblée dans certaines zones seulement du réseau pair à pair.

Le pair cherchant à remplir la fenêtre de lecture peut chercher à récupérer tous les blocs du contenu vidéo ou, en variante, chercher à n'en récupérer que certains car disposant par exemple déjà de certains de ces blocs.

Le contenu vidéo est un contenu copyrighté ayant par exemple une taille comprise entre 50 Mo (Méga Octet) et 50 Go (Giga Octet), pouvant correspondre à la retransmission en live d'un film, des épisodes d'une série, d'un message publicitaire, d'un clip vidéo, d'un évènement sportif, tel un match de football, d'un événement culturel ou autre, d'une émission diffusée sur une chaîne privée. Chaque bloc a par exemple une taille comprise entre 10 Ko (Kilo Octet) et 200 Ko. Par « retransmission en live », il faut comprendre que le décalage entre la diffusion du contenu et sa récupération sur le réseau est inférieur à 5 minutes, mieux 3 minutes, encore mieux 2 minutes.

Le contenu récupéré par le pair peut être directement visualisé par ce dernier et/ou, en variante, être transmis par ce dernier à d'autres pairs du réseau. Des pairs du réseau peuvent le cas échéant s'envoyer ensuite ce ou ces faux blocs, de sorte que la dégradation du contenu vidéo peut affecter d'autres pairs que celui auquel ce ou ces faux blocs avaient initialement été envoyés.

Préalablement à l'envoi au pair de faux bloc(s), le procédé peut comporter les étapes suivantes :
- se connecter à un annuaire du réseau pair à pair répertoriant les pairs cherchant à récupérer le contenu, et
- récupérer depuis l'annuaire les coordonnées dans le réseau d'au moins un desdits pairs cherchant à récupérer le contenu.

La connexion à l'annuaire peut être effectuée de façon répétitive, notamment périodique.

Le réseau pair à pair peut permettre l'accès à des chaînes télévisées, par exemple entre 500 et 600 chaînes télévisées. L'annuaire peut n'être associé qu'à certaines des chaînes accessibles, par exemple à une seule chaîne. Parmi ces chaînes télévisées, certaines peuvent être à accès protégé, par exemple par des droits d'accès payants ou par la souscription à un abonnement payant ou non. Le contenu vidéo que le pair cherche à récupérer peut être diffusé en streaming sur une de ces chaînes télévisées. Après connexion au pair et avant envoi de faux bloc(s), le procédé peut comporter l'étape selon laquelle on envoie au pair pendant une période prédéterminée un
ou plusieurs blocs du contenu vidéo, de manière à permettre au pair de récupérer ledit contenu. Cette période prédéterminée est par exemple comprise entre 100 Mo et 500 Mo correspondant notamment à entre 2 et 5% de la durée totale du contenu vidéo que le pair cherche à récupérer. Cette étape peut permettre de réduire les risques d'être démasqué par les pairs du réseau cherchant à récupérer le contenu vidéo, d'assurer des taux de confiance et de crédibilité importants, d'être mieux intégré au réseau, et de se placer au sommet du réseau pour la distribution des blocs.

Le contenu diffusé peut être disponible dans le réseau à partir d'un instant donné et la connexion au pair peut être effectuée préalablement à cet instant donné, notamment au moins une heure avant cet instant donné, par exemple au moins une heure et demie avant cet instant donné, et par exemple jusqu'à deux heures avant. Cette connexion antérieure peut permettre d'être mieux intégré et de créer un voisinage, par exemple en partageant avec d'autres pairs du réseau des blocs relatifs aux programmes diffusés à cet instant.

Le ou les faux blocs envoyés au pair peuvent comprendre des blocs n'appartenant pas au contenu recherché par le pair. En variante, ou en combinaison de ce qui précède, le ou les faux blocs envoyés au pair comprennent des blocs appartenant au contenu recherché et dont la qualité est dégradée. Cette dégradation de la qualité des blocs peut se traduire lors de la visualisation du contenu par des images saccadées ou figées, le pair ne pouvant visualiser les données reçues. En variante, ou en combinaison de ce qui précède, le ou les faux blocs envoyés au pair comprennent des blocs appartenant au contenu recherché mais non pertinents pour remplir la fenêtre de lecture du pair, par exemple des blocs ayant déjà été émis et ayant déjà été reçus par le pair.

Lorsque les faux blocs n'appartiennent pas au contenu recherché par le pair, il peut s'agir de publicités, de messages d'avertissement ou autres.

Le procédé peut comporter l'étape selon laquelle on récupère, avant envoi de faux-blocs, des informations relatives aux blocs de contenu recherchés par le pair. Ces informations relatives aux blocs de contenu sont par exemple la taille de ces blocs, leur indice au sein du contenu, leur ordre et/ou des informations relatives au pair telles que son adresse IP, le port utilisé ou encore la vitesse de téléchargement. Ces informations peuvent permettre la création de faux blocs coïncidant avec la fenêtre de lecture du pair.

Lorsque les faux blocs n'appartiennent pas au contenu recherché par le pair, il peut s'agir de publicités, de messages d'avertissement ou autres.

Le procédé peut comporter l'étape selon laquelle on récupère, avant envoi de faux-blocs, des informations relatives aux blocs de contenu recherchés par le pair. Ces informations relatives aux blocs de contenu sont par exemple la taille de ces blocs, leur indice au sein du contenu, leur ordre et/ou des informations relatives au pair telles que son adresse IP, le port utilisé ou encore la vitesse de téléchargement. Ces informations peuvent permettre la création de faux blocs coïncidant avec la fenêtre de lecture du pair.

Cette étape de récupération de données peut être effectuée à partir de différents endroits du réseau, avec des adresses IP différentes, pour balayer une grande zone géographique et avoir une vision du réseau la plus large possible.

L'envoi de faux blocs au pair afin de perturber la récupération par ce dernier du contenu vidéo peut durer tant que la diffusion en streaming dans le réseau du contenu vidéo est encore en cours.

En variante, l'envoi au pair de faux blocs peut être conditionné à un profil utilisateur de l'utilisateur du terminal associé au pair. Ce profil comprend par exemple des informations telles que l'âge de l'utilisateur, de façon à ne pas permettre la visualisation par des enfants de programmes violents, par exemple.

Le logiciel d'échange des pairs du réseau peut échanger des données vers un ou des pairs du réseau selon un protocole d'échange sélectif permettant aux pairs d'opérer une sélection des pairs vers lesquels des données sont transférées, cette sélection s'effectuant en fonction d'une ou plusieurs caractéristiques du pair. Le logiciel d'échange est par exemple de type BitTorrent® ou tout système d'échange similaire.

La fenêtre de lecture que le pair cherche à remplir peut avoir une taille comprise entre 2 et 3 minutes.

L'invention a encore pour objet, selon un autre de ses aspects, un système informatique selon la revendication 9.

L'invention a encore pour objet, selon un autre de ses aspects, un produit programme d'ordinateur selon la revendication 10.

L'invention pourra être mieux comprise à la lecture qui va suivre de la description d'un exemple non limitatif de mise en oeuvre de celle-ci et à l'examen du dessin annexé sur lequel :
- la figure 1 explique de façon schématique de quelle façon un contenu vidéo est lu dans un réseau pair à pair proposant des contenus vidéo,
- la figure 2 représente de façon schématique un réseau dans lequel peut être mise en oeuvre l'invention, et
- les figures 3 à 5 sont des diagrammes logiques représentant des exemples d'étapes permettant la mise en oeuvre de l'invention.

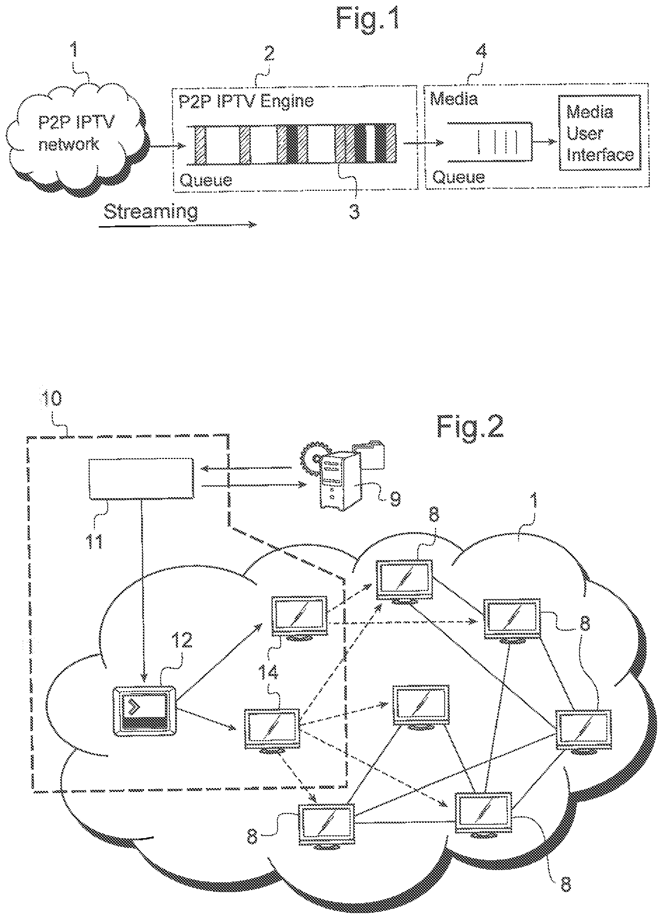

On a représenté à la figure 1, de façon schématique, un exemple de lecture par un terminal informatique associé à un pair d'un contenu vidéo dans un réseau pair à pair 1 proposant des contenus vidéo, que l'on appellera par la suite « réseau IPTV ».

Le contenu vidéo est dans l'exemple décrit diffusé en streaming sur une ou plusieurs chaînes télévisées dont l'accès est payant ou conditionné à un enregistrement préalable. Le contenu vidéo est par exemple la retransmission d'un événement sportif, culturel ou un film. Ce contenu vidéo est découpé en blocs.

Le terminal informatique met en oeuvre un logiciel 2, par exemple PPStream®, SopCast® ou autres, récupérant depuis le réseau IPTV 1 le contenu vidéo. Ce contenu BitTorrent® mais l'invention n'est pas limitée à l'emploi d'une telle technologie et peut être mise en oeuvre dans des réseaux IPTV utilisant d'autres technologies.

Ce réseau 1 comporte une pluralité de pairs 8. Bien que les terminaux associés à ces pairs aient été représentés comme étant des écrans d'ordinateurs, l'invention n'est pas limitée à un type particulier de terminal informatique. L'invention peut s'appliquer à des terminaux informatiques étant les ordinateurs, les ordinateurs portables, les assistants personnels numériques, les téléphones portables ou les téléphones portables dits intelligents (*smartphones* en anglais), ainsi qu'a des serveurs connectés sur Internet.

Le réseau 1 utilise par exemple le réseau Internet®. En variante, le réseau 1 utilise un réseau local, comme Ethernet®, ou un réseau de campus universitaire. Il peut également s'agir de réseaux utilisant des technologies sans fil tels que des réseaux téléphoniques.

Les pairs 8 cherchent par exemple à récupérer un contenu vidéo diffusé en streaming sur une des chaînes télévisées qui est à accès protégé. Pour ce faire, les pairs 8 cherchent à récupérer des blocs de ce contenu vidéo pour remplir la fenêtre de lecture 3. La récupération de ce contenu par des pairs est par exemple conditionnée à un paiement ou à la souscription d'un abonnement, payant ou non, par les pairs.

Les pairs 8 s'adressent par exemple à un annuaire 9 du réseau, appelé traqueur lorsque la technologie BitTorrent® est utilisée, et qui peut être dédié à cette chaîne télévisée. Ce traqueur 9 maintient par exemple à jour une liste des contenus vidéos diffusés en streaming par la chaîne télévisée et/ou la liste des pairs 8 du réseau possédant tout ou partie de ces contenus vidéo. En se connectant au traqueur 9, les pairs 8 peuvent déterminer comment récupérer ce contenu vidéo dans le réseau 1.

Le procédé décrit met en oeuvre un système informatique 10 configuré pour ralentir, voire éliminer, la propagation de ce contenu vidéo protégé dans le réseau 1. Dans l'exemple décrit, le système informatique 10 comprend trois éléments distincts, à savoir un fouineur 11, un faussaire 12 et des pairs contrôlés 14. Bien que sur la figure 2 un seul fouineur 11 et un seul faussaire 12 aient été représentés, l'invention n'est pas limitée à un nombre particulier de fouineurs ou de faussaires.

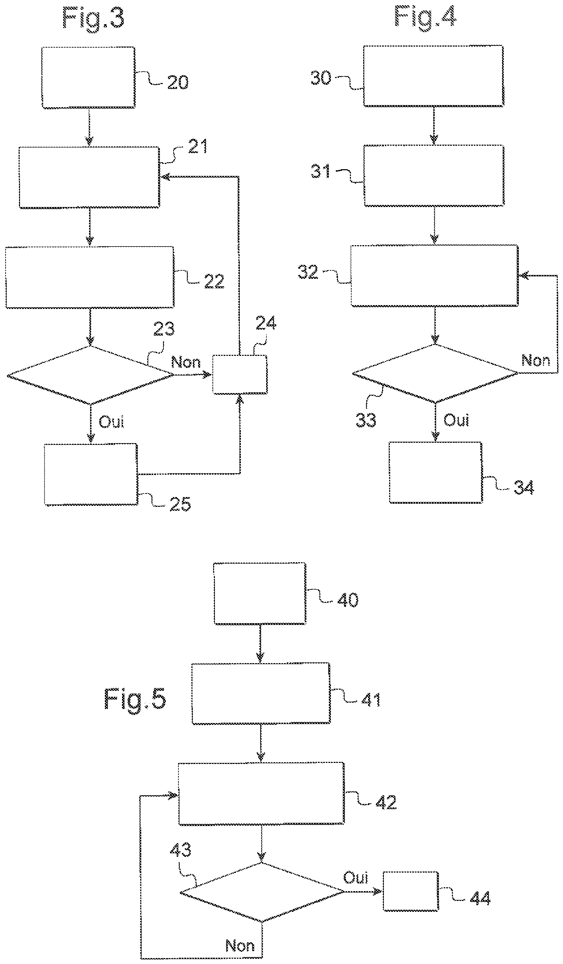

On va maintenant décrire plus en détail en référence aux figures 3 à 5 le fonctionnement des éléments du système informatique 10.

Le fouineur 11 est configuré pour récupérer les coordonnées dans le réseau 1, c'est-à-dire notamment l'adresse IP et le port utilisé, des pairs connectés au traqueur 9 sur l'identifiant de la chaîne diffusant le contenu vidéo protégé. Le fouineur 11, lorsqu'il se connecte au traqueur 9, peut être semblable aux autres pairs 8 du réseau 1. Le fouineur 11 peut être configuré pour se connecter de façon répétitive, par exemple périodiquement, au traqueur 9 afin de mettre à jour les coordonnées des pairs 8 répertoriés par l'annuaire 9 comme associés au contenu protégé, par exemple parce qu'ils en possèdent certains blocs ou parce qu'ils cherchent à récupérer des blocs de ce contenu.

Comme représenté à la figure 3, le fouineur est activé lors d'une étape 20 lorsque l'on souhaite mettre en oeuvre le procédé selon l'invention dans le réseau 1. Lors d'une étape 21, le fouineur récupère l'identifiant de la chaîne télévisée sur laquelle le contenu vidéo est diffusé.

Ultérieurement à cette étape 21, le fouineur 11 se connecte à l'étape 22 au traqueur 9 et récupère auprès de ce dernier des informations relatives au(x) pair(s) 8 associé(s) au contenu vidéo. Lors de l'étape 23, le fouineur peut comparer les informations reçues à des informations précédemment reçues, par exemple lors d'une connexion précédente au traqueur 9. Lorsqu'il résulte de cette comparaison que les informations nouvellement reçues ne diffèrent pas de celles précédemment reçues, le fouineur 11 marque une pause selon une étape 24 avant de revenir à l'étape 21.

S'il ressort de la comparaison effectuée à l'étape 23 que le traqueur 9 a transmis au fouineur 11 de nouvelles informations par rapport à celles précédemment reçues, le fouineur met à jour selon une étape 25 les informations dont il dispose avant, le cas échéant, de les envoyer au faussaire 12, puis le fouineur 11 marque une pause selon l'étape 24.

Le faussaire 12 va maintenant être décrit en référence à la figure 4.

Lors d'une étape 30, le faussaire reçoit les informations telles que l'adresse IP ou le port utilisé par un pair 8 cherchant à récupérer le contenu vidéo protégé, ces informations étant envoyées par le fouineur 11 lors de l'étape 25.

A l'étape 31, le faussaire 12 contrôle l'activation des noeuds contrôlés 14 en leur fournissant l'identifiant de la chaîne diffusant le contenu vidéo protégé et les informations relatives au pair 8 qu'il a reçues lors de l'étape 30. L'activation des pairs contrôlés 14 peut être effectuée préalablement au début de la diffusion sur la chaîne télévisée du contenu protégé, par exemple au moins une heure avant cette diffusion, par exemple une heure et demie avant, et par exemple jusqu'à deux heures avant la diffusion.

Lors d'une étape 32, le faussaire reçoit de la part des pairs contrôlés 14 des informations relatives au contenu vidéo telles que par exemple la taille des blocs de ce contenu, leur indice, leur identifiant, et/ou des informations relatives au pair 8 telles que son adresse IP ou la vitesse de téléchargement des blocs du fichier par ce dernier.

Les informations reçues lors de cette étape 32 peuvent également comprendre la localisation géographique du pair 8, par exemple lorsque les pairs contrôlés 14 comprennent un module de géolocalisation.

En variante, ce module de géolocalisation est intégré au faussaire ou est supporté par un autre composant du système informatique 10. L'emploi d'un tel module de géolocalisation permet de cibler les pairs 8 auxquels on va chercher à empêcher la transmission du contenu vidéo. Ces pairs 8 appartiennent par exemple à des pays dans lesquels la diffusion est interdite ou conditionnée à la souscription d'un abonnement, le cas échéant payant.

A l'étape 33, le faussaire détermine, s'il y a lieu, par exemple selon la localisation géographique du pair 8 ou selon la nature du contenu vidéo qu'il recherche, d'empêcher ce dernier de recevoir ce contenu vidéo.

Dans la négative, l'étape 32 est à nouveau effectuée. Dans l'affirmative, le faussaire 12 envoie de faux blocs aux pairs contrôlés 14 à la place des vrais blocs du contenu vidéo que le pair 8 cherche à récupérer. Ces faux blocs sont par exemple générés de façon à coïncider avec la fenêtre de lecture que le pair 8 cherche à remplir pour récupérer le contenu vidéo. Les faux blocs n'ont par exemple aucun rapport avec le contenu vidéo que le pair 8 cherche à récupérer. En variante, ces blocs correspondent aux blocs que le pair 8 cherche à récupérer mais présentent une qualité dégradée. Dans une autre variante, ces blocs correspondent à des blocs du contenu vidéo qui ont déjà été reçus par le pair 8.

Selon un exemple de mise en oeuvre de l'invention, l'envoi de faux blocs par le faussaire 12 vers le ou les pairs contrôlés 14 commence à partir du lancement de la diffusion en streaming dans le réseau du contenu vidéo à protéger et peut durer aussi longtemps que ce contenu est émis sur la chaîne télévisée accessible depuis le réseau.

Lors de l'étape 33, le faussaire peut déterminer si le contenu vidéo doit être protégé. L'étape 33 peut être mise en oeuvre de façon automatique, par exemple à l'aide d'une technologie de type Fingerprint, ou être mise en oeuvre de façon manuelle, par exemple à l'aide d'un opérateur.

On va maintenant décrire en référence à la figure 5 le fonctionnement d'un pair contrôlé 14 selon un exemple de mise en oeuvre de l'invention. Ce pair contrôlé 14 est configuré de manière à ce qu'il puisse se comporter comme tout pair 8 du réseau lorsque l'on ne cherche pas à ralentir, voire éliminer, la propagation du contenu vidéo dans le réseau 1.

Lors d'une étape 40, le pair contrôlé 14 est activé par le faussaire 12 selon l'étape 31 décrite en référence à la figure 4. Cette activation 40 peut intervenir préalablement au commencement de la diffusion en streaming du contenu vidéo sur une chaîne télévisée du réseau. Une fois activé selon l'étape 40, le pair contrôlé 14 se connecte, selon une étape 41, au pair 8 dont les coordonnées lui ont été fournies par le faussaire 12 lors de l'étape 40.

Le pair contrôlé 14 peut profiter de cette connexion au pair 8 pour collecter des informations sur ce pair 8 et le contenu vidéo dont il dispose ou qu'il cherche à récupérer, ces informations comprenant par exemple la taille des blocs du contenu vidéo, leur indice, leur ordre ou encore la vitesse avec laquelle le pair 8 télécharge des blocs dans le réseau 1. Ces informations sont envoyées par le pair contrôlé 14 lors d'une étape 42 et reçues par le faussaire 12 lors de l'étape 32 préalablement décrite.

Lors de l'étape 43, le pair contrôlé 14 examine si le contenu vidéo que le pair 8 cherche à récupérer est protégé.

Dans l'affirmative, le pair contrôlé 14 envoie au pair 8 selon une étape 44 des faux blocs qui lui ont été envoyés par le faussaire 12. Cet envoi n'est par exemple réalisé que si le pair 8 est situé dans une zone géographique prédéfinie. Dans la négative, l'étape 42 est à nouveau exécutée.

Dans une variante non représentée, le procédé comprend une étape selon laquelle une fois connecté au pair 8 selon l'étape 41 et après que la diffusion en streaming du contenu vidéo protégé a commencé dans le réseau, le pair contrôlé 14 transmet au pair 8 des blocs que ce dernier cherche à récupérer. Cette étape peut permettre aux pairs contrôlés 14 d'être mieux intégrés dans le réseau et de ne pas éveiller de soupçons quant à leur comportement ultérieur.

Les faux blocs peuvent être envoyés aux pairs contrôlés dès la première seconde de la diffusion du contenu vidéo à protéger. Dans le cas de chaînes télévisées dont tous les programmes sont protégés, les faux blocs peuvent être envoyés aux pairs contrôlés dès l'étape 40.

L'invention n'est pas limitée aux exemples qui viennent d'être décrits. En particulier, les pairs contrôlés 14 peuvent envoyer de faux blocs à plusieurs pairs du réseau 1 simultanément.

L'expression « comportant un » doit être comprise comme signifiant « comportant au moins un », sauf lorsque le contraire est spécifié.

## Revendications

1. Procédé pour ralentir, voire éliminer, la propagation illégale d'un contenu vidéo protégé et diffusé en streaming dans un réseau pair à pair (1) comportant au moins un pair (8) exécutant un logiciel d'échange configuré pour diffuser des données vers au moins un autre pair (8), le contenu vidéo à diffuser étant découpé en blocs qu'au moins un pair (8) du réseau cherche à récupérer pour remplir une fenêtre de lecture (3),
procédé dans lequel on se connecte audit pair (8) cherchant à récupérer ledit contenu vidéo et on lui envoie au moins un faux bloc selon qu'une condition prédéfinie relative à la localisation géographique du pair (8) est vérifiée afin de perturber la récupération par ledit pair (8) du contenu vidéo, et
dans lequel, après connexion au pair (8) et avant envoi de faux bloc(s), on envoie au pair (8) pendant une période prédéterminée un ou plusieurs blocs du contenu vidéo de manière à permettre au pair (8) de récupérer ledit contenu.

2. Procédé selon la revendication 1, dans lequel, préalablement à l'envoi au pair (8) de faux bloc(s) :
- on se connecte à un annuaire (9) du réseau pair à pair (8) répertoriant les pairs cherchant à récupérer le contenu, et
- on récupère depuis l'annuaire (9) les coordonnées dans le réseau (1) d'au moins un desdits pairs (8) cherchant à récupérer le contenu.

3. Procédé selon la revendication 1 ou 2, dans lequel la connexion à l'annuaire (9) est effectuée de façon répétitive, notamment périodique.

4. Procédé selon l'une quelconque des revendications précédentes, dans lequel le contenu à diffuser est disponible dans le réseau (1) à partir d'un instant donné et dans lequel on se connecte au pair (8) préalablement à cet instant donné, notamment au moins une heure avant cet instant donné.

5. Procédé selon l'une quelconque des revendications 1 à 4, dans lequel le ou les faux blocs envoyés au pair (8) comprennent des blocs n'appartenant pas au contenu recherché par le pair (8).

6. Procédé selon l'une quelconque des revendications 1 à 5, dans lequel le ou les faux blocs envoyés au pair (8) comprennent des blocs appartenant au contenu recherché et dont la qualité est dégradée, conduisant à des images figées et/ou saccadées lors de la visualisation du contenu.

7. Procédé selon l'une quelconque des revendications 1 à 6, dans lequel on récupère, avant envoi de faux bloc(s), des informations relatives aux blocs du contenu vidéo recherchés par le pair (8).

8. Procédé selon l'une quelconque des revendications précédentes, dans lequel le logiciel d'échange des pairs du réseau échange des données vers le ou les autres pairs selon un protocole d'échange sélectif permettant au pair d'opérer une sélection des autres pairs vers lesquels des données sont transférées, cette sélection s'effectuant en fonction d'une ou plusieurs caractéristiques des autres pairs.

9. Système informatique (10) destiné à ralentir, voire éliminer, la propagation illégale d'un contenu vidéo protégé et diffusé en streaming dans un réseau pair à pair (1) comportant au moins un pair (8) exécutant un logiciel d'échange configuré pour diffuser des données vers au moins un autre pair (8), le contenu vidéo à diffuser étant découpé en blocs qu'au moins un autre pair du réseau cherche à récupérer pour remplir une fenêtre de lecture(3),
le système informatique (10) étant configuré pour envoyer audit autre pair (8) au moins un faux bloc selon qu'une condition prédéfinie relative à la localisation géographique dudit autre pair (8) est vérifiée afin de perturber la récupération par ledit autre pair (8) du contenu vidéo, et pour, avant envoi de faux bloc(s), envoyer au pair (8) pendant une période prédéterminée un ou plusieurs blocs du contenu vidéo de manière à permettre au pair (8) de récupérer ledit contenu.

10. Produit programme d'ordinateur comportant des instructions lisibles par un système informatique (10) comportant au moins un microprocesseur, ces instructions commandant le fonctionnement du système informatique (10) de manière à ce que, dans un réseau pair à pair (1) comportant au moins un pair (8) exécutant un logiciel d'échange configuré pour servir au moins un autre pair (8), on envoie à un autre pair (8) cherchant à récupérer un contenu vidéo protégé diffusé en streaming dans le réseau (1) et découpé en blocs, au moins un faux bloc selon qu'une condition prédéfinie relative à la localisation géographique dudit autre pair (8) est vérifiée afin de perturber la récupération par ledit autre pair (8) du contenu vidéo, et
on envoie, avant envoi de faux bloc(s), au pair (8) pendant une période prédéterminée un ou plusieurs blocs du contenu vidéo de manière à permettre au pair (8) de récupérer ledit contenu.

## Patentansprüche

1. Verfahren zur Verlangsamung oder auch Eliminierung der illegalen Verbreitung eines Videoinhalts, der geschützt ist und über Streaming in einem Peer-to-Peer-Netzwerk (1) übertragen wird, das mindestens einen Peer (8) aufweist, der eine Tauschsoftware ausführt, die dafür eingerichtet ist, Daten an mindestens einen anderen Peer (8) zu übertragen, wobei der zu übertragende Videoinhalt in Blöcke aufgeteilt wird, die mindestens ein Peer (8) des Netzwerks zu erlangen versucht, um ein Lesefenster (3) zu füllen,
wobei man sich bei dem Verfahren mit dem Peer (8) verbindet, der versucht, den Videoinhalt zu erlangen, und ihm je nachdem, ob eine vorbestimmte Bedingung bezogen auf den geografischen Standort des Peers (8) überprüft ist, mindestens einen falschen Block sendet, um das Erlangen des Videoinhalts durch den Peer (8) zu stören, und
wobei nach der Verbindung mit dem Peer (8) und vor dem Senden eines falschen Blocks oder falscher Blöcke während einer vorbestimmten Zeitspanne ein oder mehrere Blöcke des Videoinhalts an den Peer (8) gesendet werden, um es dem Peer (8) zu gestatten, den Inhalt zu erlangen.

2. Verfahren nach Anspruch 1, wobei man vor dem Senden eines falschen Blocks oder falscher Blöcke an den Peer (8) :
- sich mit einem Verzeichnis (9) des Peer-to-Peer-Netzwerks (8) verbindet, das die Peers erfasst, die versuchen, den Inhalt zu erlangen, und
- aus dem Verzeichnis (9) die Koordinaten im Netzwerk (1) mindestens eines der Peers (8) erfasst, die versuchen, den Inhalt zu erlangen.

3. Verfahren nach Anspruch 1 oder 2, wobei die Verbindung mit dem Verzeichnis (9) wiederholt, insbesondere periodisch vorgenommen wird.

4. Verfahren nach einem der vorhergehenden Ansprüche, wobei der zu übertragende Inhalt ab einem bestimmten Zeitpunkt in dem Netzwerk (1) verfügbar ist und wobei man sich vor diesem bestimmten Zeitpunkt mit dem Peer (8) verbindet, insbesondere mindestens eine Stunde vor dem bestimmten Zeitpunkt.

5. Verfahren nach einem der Ansprüche 1 bis 4, wobei der oder die falschen Blöcke, die an den Peer (8) gesendet werden, Blöcke umfassen, die nicht zu dem Inhalt gehören, der von dem Peer (8) gesucht wird.

6. Verfahren nach einem der Ansprüche 1 bis 5, wobei der oder die falschen Blöcke, die an den Peer (8) gesendet werden, Blöcke umfassen, die zu dem gesuchten Inhalt gehören und deren Qualität verschlechtert ist, was bei der Visualisierung des Inhalts zu eingefrorenen und/oder stockenden Bilden führt.

7. Verfahren nach einem der Ansprüche 1 bis 6, wobei vor dem Senden eines falschen Blocks oder falscher Blöcke Informationen über die Blöcke des Videoinhalts, die von dem Peer (8) gesucht werden, erfasst werden.

8. Verfahren nach einem der vorhergehenden Ansprüche, wobei die Tauschsoftware der Peers des Netzwerks Daten an den oder die anderen Peers gemäß einen Protokoll zum selektiven Tauschen tauscht, das es dem Peer gestattet, eine Auswahl der anderen Peers zu treffen, an welche Daten übermittelt werden, wobei diese Auswahl in Abhängigkeit von einem oder mehreren Merkmalen der anderen Peers erfolgt.

9. Datenverarbeitungssystem (10), das dazu bestimmt ist, die illegale Verbreitung eines Videoinhalts zu verlangsamen oder auch zu eliminieren, der geschützt ist und über Streaming in einem Peer-to-Peer-Netzwerk (1) übertragen wird, das mindestens einen Peer (8) aufweist, der eine Tauschsoftware ausführt, die dafür eingerichtet ist, Daten an mindestens einen anderen Peer (8) zu übertragen, wobei der zu übertragende Videoinhalt in Blöcke aufgeteilt wird, die mindestens ein anderer Peer des Netzwerks zu erlangen versucht, um ein Lesefenster (3) zu füllen,
wobei das Datenverarbeitungssystem (10) dafür eingerichtet ist, mindestens einen falschen Block an den anderen Peer (8) zu senden, je nachdem, ob eine vorbestimmte Bedingung bezogen auf den geografischen Standort des anderen Peers (8) überprüft ist, um das Erlangen des Videoinhalts durch den anderen Peer (8) zu stören, und um vor dem Senden eines falschen Blocks oder falscher Blöcke während einer vorbestimmten Zeitspanne einen oder mehrere Blöcke des Videoinhalts an den Peer (8) zu senden, um es dem Peer (8) zu gestatten, den Inhalt zu erlangen.

10. Computerprogrammprodukt aufweisend Anweisungen, die von einem Datenverarbeitungssystem (10) gelesen werden können, das mindestens einen Mikroprozessor aufweist, wobei diese Anweisungen den Betrieb des Datenverarbeitungssystems (10) so steuern, dass in einem Peer-to-Peer-Netzwerk (1), das mindestens einen Peer (8) aufweist, der eine Tauschsoftware ausführt, die dafür eingerichtet ist, mindestens einen anderen Peer (8) zu bedienen, je nachdem, ob eine vorbestimmte Bedingung bezogen auf den geografischen Standort des anderen Peers (8) überprüft ist, mindestens ein falscher Block an einen anderen Peer (8) gesendet wird, der versucht, einen geschützten Videoinhalt zu erlangen, der über Streaming in dem Netzwerk (1) übertragen wird und in Blöcke aufgeteilt ist, um das Erlangen des Videoinhalts durch den anderen Peer (8) zu stören, und vor dem Senden eines falschen Blocks oder falscher Blöcke während einer vorbestimmten Zeitspanne ein oder Blöcke des Videoinhalts an den Peer (8) gesendet werden, um es dem Peer (8) zu gestatten, den Inhalt zu erlangen.

## Claims

1. Method for slowing down, or indeed eliminating, the illegal propagation of a protected video content streamed in a peer-to-peer network (1) comprising at least one peer (8) executing exchange software configured to broadcast data to at least one other peer (8), the video content to be broadcast being cut up into blocks that at least one peer (8) of the network seeks to retrieve so as to fill a reading window (3),
in which method one connects to said peer (8) seeking to retrieve said video content and one dispatches to it at least one false block according as a predefined condition relating to the geographical location of the peer (8) is satisfied so as to disturb the retrieval by said peer (8) of the video content, and
in which, after connection to the peer (8) and before dispatching of false block(s), one or more blocks of the video content is or are dispatched to the peer (8) over a predetermined period so as to enable the peer (8) to retrieve said content.

2. Method according to Claim 1, in which, prior to the dispatching to the peer (8) of false block(s):
- one connects to a directory (9) of the peer-to-peer network (8) cataloguing the peers seeking to retrieve the content, and
- the coordinates in the network (1) of at least one of said peers (8) seeking to retrieve the content are retrieved from the directory (9).

3. Method according to Claim 1 or 2, in which the connection to the directory (9) is performed in a repetitive, notably periodic, manner.

4. Method according to any one of the preceding claims, in which the content to be broadcast is available in the network (1) from a given instant and in which one connects to the peer (8) prior to this given instant, notably at least an hour before this given instant.

5. Method according to any one of Claims 1 to 4, in which the false block or blocks dispatched to the peer (8) comprise blocks not belonging to the content sought by the peer (8).

6. Method according to any one of Claims 1 to 5, in which the false block or blocks dispatched to the peer (8) comprise blocks belonging to the content sought and whose quality is degraded, leading to frozen and/or jerky images when viewing the content.

7. Method according to any one of Claims 1 to 6, in which, before dispatching of false block(s), information relating to the blocks of the video content that are sought by the peer (8) is retrieved.

8. Method according to any one of the preceding claims, in which the exchange software of the peers of the network exchanges data towards the other peer or peers according to a selective exchange protocol enabling the peer to make a selection of the other peers towards which data are transferred, this selection being performed as a function of one or more characteristics of the other peers.

9. Computerized system (10) intended to slow down, or indeed eliminate, the illegal propagation of a protected video content streamed in a peer-to-peer network (1) comprising at least one peer (8) executing exchange software configured to broadcast data to at least one other peer (8), the video content to be broadcast being cut up into blocks that at least one other peer of the network seeks to retrieve so as to fill a reading window(3),
the computerized system (10) being configured to dispatch to said other peer (8) at least one false block according as a predefined condition relating to the geographical location of said other peer (8) is satisfied so as to disturb the retrieval by said other peer (8) of the video content, and to, before dispatching of false block(s), dispatch to the peer (8) over a predetermined period one or more blocks of the video content so as to enable the peer (8) to retrieve said content.

10. Computer program product comprising instructions readable by a computerized system (10) comprising at least one microprocessor, these instructions controlling the operation of the computerized system (10) in such a way that, in a peer-to-peer network (1) comprising at least one peer (8) executing exchange software configured to serve at least one other peer (8), at least one false block is dispatched to another peer (8) seeking to retrieve a protected video content streamed in the network (1) and cut up into blocks according as a predefined condition relating to the geographical location of said other peer (8) is satisfied so as to disturb the retrieval by said other peer (8) of the video content, and
before dispatching of false block(s), one or more blocks of the video content is or are dispatched to the peer (8) over a predetermined period so as to enable the peer (8) to retrieve said content.
